# EUROPEAN PATENT SPECIFICATION

(11) **EP 4 152 466 B1**
(45) Date of publication and mention of the grant of the patent: **23.07.2025**
(21) Application number: 22736854.5
(22) Date of filing: 06.01.2022
(51) Int. Cl.: H01M 10/0567, H01M 10/0568, H01M 10/0569, H01M 10/052

(54) **ELECTROLYTE FOR LITHIUM-SULFUR BATTERY, AND LITHIUM-SULFUR BATTERY COMPRISING SAME**
ELEKTROLYT FÜR LITHIUM-SCHWEFEL-BATTERIE UND LITHIUM-SCHWEFEL-BATTERIE DAMIT
ÉLECTROLYTE POUR ACCUMULATEUR LITHIUM-SOUFRE ET ACCUMULATEUR LITHIUM-SOUFRE LE COMPRENANT

(30) Priority: 07.01.2021 KR 20210001823
(43) Date of publication of application: 22.03.2023
(73) Proprietor: LG Energy Solution, Ltd., Seoul 07335 (KR)
(72) Inventor: PARK, Seonghyo, Daejeon 34122 (KR); KIM, Hyeon Jin, Daejeon 34122 (KR); PARK, Changhun, Daejeon 34122 (KR)
(74) Representative: Goddar, Heinz J.
(86) International application number: PCT/KR2022/000234
(87) International publication number: WO 2022/149877

(56) References cited:
- WO-A1-2020/105981
- CN-A- 106 340 675
- CN-A- 110 854 437
- CN-A- 111 786 019
- KR-A- 20050 038 897
- KR-A- 20150 032 416
- KR-A- 20180 114 631
- KR-A- 20200 005 369

## Description

### [Technical Field]

The present invention relates to an electrolyte solution for a lithium-sulfur battery and a lithium-sulfur battery containing the same, and more particularly, to an electrolyte solution for a lithium-sulfur battery, which can improve the lifetime characteristics and lithium cycle efficiency of a lithium-sulfur battery by appropriately combining the solvent, lithium salt, and additive contained in the electrolyte solution of the lithium-sulfur battery, and a lithium-sulfur battery containing the same.

### [Background Art]

As the application area of secondary battery are expanding to the electric vehicles (EV) or the energy storage devices (ESS), the lithium-ion secondary battery with relatively low weight-to-energy storage density (~ 250 Wh/kg) are facing limitations in application to such products. Alternatively, since the lithium-sulfur secondary battery can achieve the theoretically high weight-to-energy storage density (~ 2,600 Wh/kg), it is attracting attention as a next-generation secondary battery technology.

The lithium-sulfur battery means a battery system using a sulfur-based material having an S-S bond (sulfur-sulfur bond) as a positive electrode active material and using lithium metal as a negative electrode active material. Sulfur, which is the main material of the positive electrode active material has advantages that it is very rich in resources worldwide, is not toxic, and has a low atomic weight.

In the lithium-sulfur secondary battery, when discharging the battery, lithium which is a negative electrode active material is oxidized while releasing electron and thus ionizing, and the sulfur-based material which is a positive electrode active material is reduced while accepting the electron. In that case, the oxidation reaction of lithium is a process by which lithium metal releases electron and is converted to lithium cation form. In addition, the reduction reaction of sulfur is a process by which the S-S bond accepts two electrons and is converted to a sulfur anion form. The lithium cation produced by the oxidation reaction of lithium is transferred to the positive electrode through the electrolyte and is combined with the sulfur anion generated by the reduction reaction of sulfur to form a salt. Specifically, sulfur before discharging has a cyclic S₈ structure, which is converted to lithium polysulfide (LiSₓ) by the reduction reaction. When the lithium polysulfide is completely reduced, lithium sulfide (Li₂S) is produced.

Sulfur, which is a positive electrode active material, is difficult to secure reactivity with electrons and lithium ions in a solid state due to its low electrical conductivity characteristics. In the existing lithium-sulfur secondary battery, in order to improve the reactivity of sulfur, an intermediate polysulfide in the form of Li₂Sₓ is generated to induce a liquid phase reaction and improve the reactivity. In this case, an ether-based solvent such as dioxolane and dimethoxy ethane, which are highly soluble for lithium polysulfide, is used as a solvent for the electrolyte solution.

However, when such an ether-based solvent is used, there is a problem that the lifetime characteristics of the lithium-sulfur battery are deteriorated due to various causes. For example, the lifetime characteristics of lithium-sulfur batteries may be deteriorated by the leaching of the lithium polysulfide from the positive electrode, the occurrence of a short due to the growth of dendrites on the lithium negative electrode and the deposition of by-products from the decomposition of the electrolyte solution, etc.

In particular, when such an ether-based solvent is used, it can dissolve a large amount of lithium polysulfide and thus has high reactivity. However, due to the nature of lithium polysulfide soluble in the electrolyte solution, the reactivity and lifetime characteristics of sulfur are affected by the content of the electrolyte solution.

Recently, in order to develop a lithium-sulfur secondary battery having a high energy density of 500 Wh/kg or more, which is required for aircraft and next-generation electric vehicles, it is required that the loading amount of sulfur in the electrode is large and the content of the electrolyte solution is minimized.

However, due to the characteristics of the ether-based solvent, there is a problem that as the content of the electrolyte solution is decreased, the viscosity is increased rapidly during charging/discharging, and thus the overvoltage may be occurred and the battery may be deteriorated.

Therefore, in order to prevent the decomposition of the electrolyte solution and secure excellent lifetime characteristics, researches on adding a separate additive to the electrolyte solution are continuously being conducted. Nevertheless, the components and composition of the electrolyte solution, which can improve lifetime characteristics and lithium cycle efficiency, have not been clearly identified.

### [Prior Art Document]

### [Patent Document]

(Patent Document 1) Korean Laid-open Patent Publication No. 10-2007-0027512 (March 09, 2007), "ELECTROLYTES FOR LITHIUM-SULFUR ELECTROCHEMICAL CELLS"

CN 111786019 A discloses a secondary battery comprising a positive electrode; a negative electrode capable of allowing lithium ions to be inserted and to be extracted; and an inorganic solid-containing layer which is disposed between the positive electrode and the negative electrode and an electrolyte. The electrolyte comprises (i) 0.5-10 M of a lithium boron salt; (ii) 0.1-5 wt.-% of an auxiliary additive, preferably lithium nitrate; a mixture of two or three solvents, two of them being (iii) an ester, including heterocyclic compounds; and (iv) an ether solvent.

CN 106340675 A discloses a secondary battery comprising a positive electrode; a negative electrode; and electrolyte. The electrolyte comprises (i) 0.1-4 Mol/l of a lithium borate salt; (ii) 0-2 Mol/l of lithium nitrate; and a mixture of solvents including (iii) a heterocyclic compound; and (iv) an ether solvent.

### [Disclosure]

### [Technical Problem]

Accordingly, in the present invention, it was confirmed that by incorporating a first solvent comprising a heterocyclic compound containing one or more double bonds and at the same time, containing any one of an oxygen atom and a sulfur atom; a second solvent comprising at least one of an ether-based compound, an ester-based compound, an amide-based compound, and a carbonate-based compound; lithium salt; lithium nitrate; and borate-based lithium salt, and thus solving the above problems, in order to improve the lifetime characteristics and lithium cycle efficiency of a lithium-sulfur battery, the performance of the lithium-sulfur battery can be improved, thereby completing the present invention.

Therefore, it is an object of the present invention to provide an electrolyte solution for lithium-sulfur battery capable of improving the lifetime characteristics and lithium cycle efficiency of the lithium-sulfur battery. In addition, it is another object of the present invention to provide a lithium-sulfur battery with improved battery performance by providing the above electrolyte solution.

### [Technical Solution]

In order to achieve the above objects, the present invention provides an electrolyte solution for a lithium-sulfur battery comprising a first solvent comprising a heterocyclic compound containing one or more double bonds and at the same time, containing any one of an oxygen atom and a sulfur atom, wherein the heterocyclic compound is selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene; a second solvent comprising at least one of an ether-based compound, an ester-based compound, an amide-based compound, and a carbonate-based compound; lithium salt, wherein the lithium salt is at least one selected from the group consisting of LiCl, LiBr, LiI, LiClO₄, LiPF₆, LiCF₃SO₃, LiCF₃CO₂, LiAsF₆, LiSbF₆, LiAlCl₄, CH₃SO₃Li, CF₃SO₃Li, (C₂F₅SO₂)₂NLi, (SO₂F)₂NLi, (CF₃SO₂)₃CLi, and lithium lower aliphatic carboxylate having 4 or less carbon atoms; lithium nitrate; and borate-based lithium salt.

In addition, the present invention provides a lithium-sulfur battery comprising a positive electrode; a negative electrode; a separator interposed between the positive electrode and the negative electrode; and the above electrolyte solution for the lithium-sulfur battery.

Further embodiments are disclosed in the dependent claims.

### [Advantageous Effects]

According to the electrolyte solution for the lithium-sulfur battery according to the present invention and the lithium-sulfur battery comprising the same, it is possible to obtain the effect of improving the lifetime characteristics and lithium cycle efficiency of a lithium-sulfur battery having the electrolyte solution, by incorporating a first solvent comprising a heterocyclic compound containing one or more double bonds and at the same time, containing any one of an oxygen atom and a sulfur atom; a second solvent comprising at least one of an ether-based compound, an ester-based compound, an amide-based compound, and a carbonate-based compound; lithium salt; lithium nitrate; and borate-based lithium salt to the electrolyte solution for the lithium-sulfur battery.

### [Description of Drawings]

FIG. 1 is a graph showing the lifetime characteristics of the lithium-sulfur batteries to which the electrolyte solutions for the lithium-sulfur batteries of Examples 1 to 3 of the present invention and Comparative Examples 1 and 2 were applied.
FIG. 2 is a graph showing the lifetime characteristics of the lithium-sulfur batteries to which the electrolyte solutions for the lithium-sulfur batteries of Examples 1, 4 to 8 of the present invention and Comparative Example 1 were applied.

### [Best Mode]

Hereinafter, the present invention will be described in detail.

The embodiments provided according to the present invention can all be achieved by the following description. It is to be understood that the following description describes preferred embodiments of the present invention, and it should be understood that the present invention is not necessarily limited thereto.

The present invention provides an electrolyte solution for a lithium-sulfur battery comprising A) a first solvent comprising a heterocyclic compound containing one or more double bonds and at the same time, containing any one of an oxygen atom and a sulfur atom, wherein the heterocyclic compound is selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene; B) a second solvent comprising at least one of an ether-based compound, an ester-based compound, an amide-based compound, and a carbonate-based compound; C) lithium salt, wherein the lithium salt is at least one selected from the group consisting of LiCl, LiBr, LiI, LiClO₄, LiPF₆, LiCF₃SO₃, LiCF₃CO₂, LiAsF₆, LiSbF₆, LiAlCl₄, CH₃SO₃Li, CF₃SO₃Li, (C₂F₅SO₂)₂NLi, (SO₂F)₂NLi, (CF₃SO₂)₃CLi, and lithium lower aliphatic carboxylate having 4 or less carbon atoms; D) lithium nitrate; and E) borate-based lithium salt.

Hereinafter, each of A) the first solvent, B) the second solvent, C) lithium salt, D) lithium nitrate and E) borate-based lithium salt comprised in the electrolyte solution for the lithium-sulfur battery of the present invention will be specifically described.

### A) First solvent

The electrolyte solution for the lithium-sulfur battery according to the present invention comprises a first solvent comprising a heterocyclic compound containing one or more double bonds and at the same time, containing any one of an oxygen atom and a sulfur atom.

The first solvent comprises a heterocyclic compound containing one or more double bonds and at the same time containing any one of an oxygen atom and a sulfur atom. The heterocyclic compound has the property of being difficult to dissolve salts due to the delocalization of the lone pair electrons of the hetero atom (oxygen atom or sulfur atom). In a lithium-sulfur battery using a lithium-based metal as a negative electrode, a polymer protective film (solid electrolyte interface, SEI layer) is formed on the surface of a lithium-based metal (negative electrode) by a ring opening reaction of a heterocyclic compound in the initial discharging stage of the battery, and thus it is possible to suppress the formation of lithium dendrite, and furthermore, it is possible to improve the lifetime characteristics of the lithium-sulfur battery by reducing the decomposition of the electrolyte solution on the surface of lithium-based metal and subsequent side reactions.

Accordingly, the heterocyclic compound of the present invention is essentially required to have at least one double bond, in order to form a polymeric protective film on the surface of a lithium-based metal. In addition, since the heterocyclic compound of the present invention increases affinity with other organic solvents of the electrolyte solution to facilitate utilization as a component of the electrolyte solution, by including oxygen or sulfur to make it polar, it must also contain the hetero atom (oxygen atom or sulfur atom).

The heterocyclic compound is selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene, preferably 2-methylfuran.

The content of the first solvent containing such a heterocyclic compound may be 5 vol.% to 50 vol.%, preferably 10 vol.% to 30 vol.%, more preferably 15 vol.% to 20 vol.%, relative to the total volume of the organic solvent (i.e., the first solvent + the second solvent) contained in the electrolyte solution for the lithium-sulfur battery of the present invention (the rest corresponds to the second solvent). If the content of the first solvent is less than the above range, there may be a problem that the ability to reduce the leaching amount of the polysulfide decreases, and thus the increase in the resistance of the electrolyte solution cannot be suppressed, or the protective film is not completely formed on the surface of the lithium-based metal. In addition, if the content of the first solvent exceeds the above range, there is a concern that a problem of decreasing the capacity and lifetime of the battery may occur due to the increase in the surface resistance of the electrolyte solution and the lithium-based metal. Therefore, it is preferable that the content of the first solvent satisfies the above range.

### B) Second solvent

The electrolyte solution for the lithium-sulfur battery according to the present invention comprises a second solvent comprising at least one of an ether-based compound, an ester-based compound, an amide-based compound, and a carbonate-based compound.

The second solvent comprises at least one of an ether-based compound, an ester-based compound, an amide-based compound, and a carbonate-based compound. The second solvent serves not only to dissolve the lithium salt so that the electrolyte solution has lithium-ion conductivity, but also to elutes sulfur, which is a positive electrode active material, and thus smoothly conduct an electrochemical reaction with lithium. The carbonate-based compound may be a linear carbonate-based compound or a cyclic carbonate-based compound.

Specific examples of the ether-based compound may be, but are not limited to, at least one selected from the group consisting of dimethyl ether, diethyl ether, dipropylether, methylethyl ether, methylpropylether, ethylpropylether, dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetra-ethylene glycol dimethyl ether, tetra-ethylene glycol diethyl ether, tetra-ethylene glycol methyl ethyl ether, polyethylene glycol dimethyl ether, polyethylene glycol diethyl ether, and polyethylene glycol methyl ethyl ether, and preferably dimethoxyethane.

In addition, the ester-based compound may be, but is not limited to, at least one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone. In addition, the amide-based compound may be a conventional amide-based compound used in the art.

In addition, the linear carbonate-based compound may be, but is not limited to, at least one selected from the group consisting of dimethyl carbonate (DMC), diethyl carbonate (DEC), dipropyl carbonate (DPC), ethylmethyl carbonate (EMC), methylpropyl carbonate (MPC), and ethylpropyl carbonate (EPC).

In addition, the cyclic carbonate-based compound may be, but is not limited to, at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate and halides thereof (fluoroethylene carbonate (FEC), etc.).

Meanwhile, if the second solvent is comprised in an amount less than an appropriate amount, there is a concern that the lithium salt cannot be sufficiently dissolved and thus the lithium-ion conductivity is decreased, and that sulfur, which is an active material, exceeds the concentration at which it can be dissolved, and thus a problem of precipitation is occurred. If the second solvent is comprised in an excess amount, there may be a problem that sulfur, which is a positive electrode active material, is excessively leached, resulting in a severe shuttle phenomenon of lithium polysulfide and lithium negative electrode and a decrease in lifetime.

Meanwhile, the organic solvent including the first solvent and the second solvent may be contained in an amount of 70 to 97 wt.%, preferably 75 to 96 wt.%, more preferably 90 to 96 wt.%, relative to the total weight of the electrolyte solution for the lithium-sulfur battery of the present invention. If the organic solvent is contained in an amount of less than 70 wt.% relative to the total weight of the electrolyte solution for the lithium-sulfur battery, there may be a problem that the viscosity of the electrolyte solution is increased and the ion conductivity is decreased, or a problem that the lithium salt or the additive is not completely dissolved in the electrolyte solution. If the organic solvent is contained in a content exceeding 97 wt.%, there may be a problem that as the concentration of the lithium salt in the electrolyte solution is lowered, the ion conductivity is reduced. Therefore, it is preferable that the content of the first solvent and the second solvent satisfy the above range.

In addition, the volume ratio of the first solvent and the second solvent may be 1:2.5 to 1:6, preferably 1:4 to 1:6, more preferably 1:4 to 1:5.5. If the volume ratio of the first solvent and the second solvent is less than the above range, there may be a problem that the lithium salt cannot be sufficiently dissolved and thus the lithium-ion conductivity is decreased, and that sulfur, which is an active material, exceeds the concentration at which it can be dissolved, and thus a problem of precipitation is occurred. If the volume ratio of the first solvent and the second solvent exceeds the above range, there may be a problem that sulfur, which is a positive electrode active material, is excessively leached, resulting in a severe shuttle phenomenon of lithium polysulfide and lithium negative electrode and a decrease in lifetime. Therefore, it is preferable that the volume ratio of the first solvent and the second solvent satisfies the above range.

### C) Lithium salt

The electrolyte solution for the lithium-sulfur battery according to the present invention comprises a lithium salt as an electrolyte salt used to increase ion conductivity.

The lithium salt is at least one selected from the group consisting of LiCl, LiBr, LiI, LiClO₄, LiPF₆, LiCF₃SO₃, LiCF₃CO₂, LiAsF₆, LiSbF₆, LiAlCl₄, CH₃SO₃Li, CF₃SO₃Li, (C₂F₅SO₂)₂NLi, (SO₂F)₂NLi, (CF₃SO₂)₃CLi and lithium lower aliphatic carboxylate having 4 or less carbon atoms, and preferably, LiFSI((SO₂F)₂NLi) may be comprised as an essential component.

The concentration of the lithium salt may be determined in consideration of ion conductivity and the like, and may be, for example, 0.2 M to 2 M, preferably 0.5 M to 1 M. If the concentration of the lithium salt is less than the above range, it may be difficult to secure ion conductivity suitable for operating a battery. If the concentration of the lithium salt exceeds the above range, as the viscosity of the electrolyte solution is increased, the mobility of lithium ions is lowered, or the decomposition reaction of the lithium salt itself is increased, and thus the performance of the battery may be deteriorated. Therefore, it is preferable thin a concentration of the lithium salt satisfies the above range.

### D) Lithium nitrate

In addition, the electrolyte solution for the lithium-sulfur battery according to the present invention includes lithium nitrate (LiNO₃). However, if necessary, the electrolyte solution may further comprise at least one selected from the group consisting of lanthanum nitrate (La(NO₃)₃), potassium nitrate (KNO₃), cesium nitrate (CsNO₃), magnesium nitrate (Mg(NO₃)₂), barium nitrate (Ba(NO₃)₂), lithium nitrite (LiNO₂), potassium nitrite (KNO₂) and cesium nitrite (CsNO₂).

The lithium nitrate may be contained in an amount of 1 to 7 wt.%, preferably 2 to 6 wt.%, more preferably 3 to 5 wt.%, relative to the total weight of the electrolyte solution for the lithium-sulfur battery. If the lithium nitrate content is less than 1 wt.%, relative to the total weight of the electrolyte solution for the lithium-sulfur battery, the coulombic efficiency can be drastically reduced. If the content of lithium nitrate exceeds 7 wt.%, the viscosity of the electrolyte solution may be increase, making it difficult to operate the battery. Therefore, it is preferable that the content of lithium nitrate satisfies the above range.

### E) Borate-based lithium salt

The electrolyte solution for the lithium-sulfur battery according to the present invention comprises borate-based lithium salt as an additive. The borate-based lithium salt may be at least one selected from the group consisting of lithium tetrafluoroborate (LiBF₄), lithium bis(oxalate)borate (LiBOB), lithium difluoro(oxlato)borate (LiFOB) and lithium bis(2-methyl-2-fluoro-malonato)borate, preferably lithium difluoro(oxlato)borate (LiFOB, LiDFOB).

The content of the borate-based lithium salt may be 0.01 wt.% to 5.0 wt.%, preferably 0.05 wt.% to 4.0 wt.%, and more preferably 0.1 wt.% to 3.0 wt.%, relative to the total weight of the electrolyte solution for the lithium-sulfur battery. If the content of the borate-based lithium salt is less than the above range, there may be a problem that a protective film cannot be sufficiently formed on the surface of the lithium-based metal. If the content of the borate-based lithium salt exceeds the above range, the capacity and lifetime of the battery may be decreased due to an increase in the surface resistance of the lithium-based metal. Therefore, it is preferable that the content of the borate-based lithium salt satisfies the above range.

In addition, the weight ratio of the borate-based lithium salt and the lithium nitrate may be 1:1 to 1:30, preferably 1:2 to 1:30, more preferably 1:3 to 1:30. If the weight ratio of the borate-based lithium salt and the lithium nitrate is less than the above range, the coulombic efficiency may be rapidly lowered. If the weight ratio of the borate-based lithium salt and the lithium nitrate exceeds the above range, there may be a problem that a protective film cannot be sufficiently formed on the surface of the lithium-based metal. Therefore, it is preferable that the weight ratio of the borate-based lithium salt and the lithium nitrate satisfies the above range.

Meanwhile, the total content of the borate-based lithium salt and the lithium nitrate may be 2 wt.% to 8 wt.%, preferably 3 wt.% to 7 wt.%, more preferably 3 wt.% to 5 wt.%, relative to the total weight of the electrolyte solution for the lithium-sulfur battery. If the total content of the borate-based lithium salt and the lithium nitrate is less than the above range, there may be a problem that a protective film cannot be sufficiently formed on the surface of the lithium-based metal, and the coulombic efficiency of the battery is rapidly lowered. If the total content of the borate-based lithium salt and the lithium nitrate exceeds the above range, the viscosity of the electrolyte solution may increase, thereby making it difficult to operate the battery. Therefore, it is preferable that the total content of the borate-based lithium salt and the lithium nitrate satisfies the above range.

Next, the lithium-sulfur battery according to the present invention will be described. The lithium-sulfur battery comprises a positive electrode, a negative electrode, a separator interposed between the positive electrode and the negative electrode, and the electrolyte solution for the lithium-sulfur battery.

As described above, the electrolyte solution for the lithium-sulfur battery comprises A) the first solvent, B) the second solvent, C) lithium salt, D) lithium nitrate, and E) borate-based lithium salt, and a detailed description thereof is the same as described above. In addition, the lithium-sulfur battery may be any lithium-sulfur battery commonly used in the art, and among them, a lithium-sulfur battery may be most desirable.

Hereinafter, in the lithium-sulfur battery according to the present invention, the positive electrode, the negative electrode, and the separator will be described in more detail.

As described above, the positive electrode comprised in the lithium-sulfur battery of the present invention comprises a positive electrode active material, a binder, and an electrically conductive material.

The positive electrode active material may be one that can be applied to a conventional lithium-sulfur battery, and for example may comprise elemental sulfur (S₈), a sulfur-based compound, or a mixture thereof. Specifically, the sulfur-based compound may be Li₂Sₙ (n≥1), an organosulfur compound or a carbon-sulfur composite ((C₂Sₓ)ₙ: x=2.5 ~ 50, n≥2). In addition, the positive electrode active material may comprise a sulfur-carbon composite, and since the sulfur material alone does not have electrical conductivity, it may be used in combination with an electrically conductive material. The carbon material (or carbon source) constituting the sulfur-carbon composite may have a porous structure or a high specific surface area, and any carbon material may be used as long as it is commonly used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT), and multiwall carbon nanotubes (MWCNT); carbon fibers such as graphite nanofiber (GNF), carbon nanofiber (CNF), and activated carbon fiber (ACF); and activated carbon, and its shape may be spherical, rod-shaped, needle-shaped, plate-shaped, tubular or bulk-shaped, and it can be used without limitation as long as it is commonly used in a lithium-sulfur battery.

In addition, pores are formed in the carbon material, and the porosity of the pores is 40 to 90%, preferably 60 to 80%. If the porosity of the pores is less than 40%, since lithium ions are not delivered normally, it can act as a resistance component and cause problems. If the porosity of the pores exceeds 90%, a problem of lowering the mechanical strength may occur. In addition, the pore size of the carbon material is 10 nm to 5 *µ*m, preferably 50 nm to 5 *µ*m. If the pore size is less than 10 nm, there may be a problem that lithium ions cannot be transmitted. If the pore size exceeds 5 *µ*m, a short circuit of the battery due to contact between electrodes and safety problems may occur.

The binder is a component that assists in the bonding between a positive electrode active material and an electrically conductive material and the bonding to a current collector, and for example, may be, but is not limited to, at least one selected from the group consisting of polyvinylidenefluoride (PVdF), polyvinylidenefluoride-polyhexafluoropropylene copolymer (PVdF/HFP), polyvinylacetate, polyvinylalcohol, polyvinylether, polyethylene, polyethyleneoxide, alkylated polyethyleneoxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butylene rubber, fluorine rubber, carboxymethylcellulose (CMC), starch, hydroxypropyl cellulose, regenerated cellulose, and mixtures thereof.

The binder is usually added in an amount of 1 to 50 parts by weight, preferably 3 to 15 parts by weight, based on 100 parts by weight of the total weight of the positive electrode. If the content of the binder is less than 1 part by weight, the adhesive strength between the positive electrode active material and the current collector may be insufficient. If the content of the binder is more than 50 parts by weight, the adhesive strength is improved but the content of the positive electrode active material may be reduced accordingly, thereby lowering the capacity of the battery.

The electrically conductive material comprised in the positive electrode is not particularly limited as long as it does not cause side reactions in the internal environment of the lithium-sulfur battery and has excellent electrical conductivity while not causing chemical changes in the battery. The electrically conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The electrically conductive material is typically added in an amount of 0.5 to 50 parts by weight, preferably 1 to 30 parts by weight based on 100 parts by weight of total weight of the positive electrode. If the content of electrically conductive material is too low, that is, if it is less than 0.5 parts by weight, it is difficult to obtain an effect on the improvement of the electrical conductivity, or the electrochemical characteristics of the battery may be deteriorated. If the content of the electrically conductive material exceeds 50 parts by weight, that is, if it is too much, the amount of positive electrode active material is relatively small and thus capacity and energy density may be lowered. The method of incorporating the electrically conductive material into the positive electrode is not particularly limited, and conventional methods known in the related art such as coating on the positive electrode active material can be used. Also, if necessary, the addition of the second coating layer with electrical conductivity to the positive electrode active material may replace the addition of the electrically conductive material as described above.

In addition, a filler may be selectively added to the positive electrode of the present invention as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The positive electrode active material, the binder, the electrically conductive material and the like are dispersed and mixed in a dispersion medium (solvent) to form a slurry, and the slurry can be applied onto the positive electrode current collector, followed by drying and rolling it to prepare a positive electrode. The dispersion medium may be, but is not limited to, N-methyl-2-pyrrolidone (NMP), dimethyl formamide (DMF), dimethyl sulfoxide (DMSO), ethanol, isopropanol, water, or a mixture thereof.

The positive electrode current collector may be, but is not necessarily limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), or an alloy thereof, or aluminum (Al) or stainless steel whose surface is treated with carbon (C), nickel (Ni), titanium (Ti) or silver (Ag) or so on. The shape of the positive electrode current collector may be in the form of a foil, film, sheet, punched form, porous body, foam or the like.

The negative electrode is a lithium-based metal, and may further include a current collector on one side of the lithium-based metal. The current collector may be a negative electrode current collector. The negative electrode current collector is not particularly limited as long as it has high electrical conductivity without causing chemical changes in the battery, and may be selected from the group consisting of copper, aluminum, stainless steel, zinc, titanium, silver, palladium, nickel, iron, chromium, and alloys, and combinations thereof. The stainless steel can be surface-treated with carbon, nickel, titanium, or silver, and the alloy may be an aluminum-cadmium alloy. In addition, sintered carbon, a non-conductive polymer surface-treated with an electrically conductive material or a conductive polymer may be used. In general, a thin copper foil is used as the negative electrode current collector.

In addition, the shape of the negative electrode current collector can be various forms such as a film having or not having fine irregularities on its surface, sheet, foil, net, porous body, foam, nonwoven fabric and the like. In addition, the thickness of the negative electrode current collector is in the thickness range of 3 to 500 *µ*m. If the thickness of the negative electrode current collector is less than 3 *µ*m, the current collecting effect is lowered. On the other hand, if the thickness exceeds 500 *µ*m, when folding and then assembling the cell, there is a problem that the workability is reduced.

The lithium-based metal may be lithium or a lithium alloy. In that case, the lithium alloy contains an element capable of alloying with lithium, and specifically the lithium alloy may be an alloy of lithium and at least one selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge, and Al.

The lithium-based metal may be in the form of a sheet or foil, and in some cases, may be in a form in which lithium or a lithium alloy is deposited or coated on a current collector by a dry process, or may be in a form in which metal and an alloy in a particle phase are deposited or coated by a wet process or the like.

A conventional separator may be interposed between the positive electrode and the negative electrode. The separator is a physical separator having a function of physically separating the electrodes, and can be used without particular limitation as long as it is used as a conventional separator, and particularly, a separator with low resistance to ion migration in the electrolyte solution and excellent impregnating ability for the electrolyte solution is preferable.

In addition, the separator enables the transport of lithium ions between the positive electrode and the negative electrode while separating or insulating the positive electrode and the negative electrode from each other. The separator may be made of a porous, nonconductive, or insulating material. The separator may be an independent member such as a film or a coating layer added to the positive electrode and/or the negative electrode.

Examples of the polyolefin-based porous film which can be used as the separator may be films formed of any polymer alone selected from polyethylenes such as high density polyethylene, linear low density polyethylene, low density polyethylene, and ultra-high molecular weight polyethylene, and polyolefin-based polymers such as polypropylene, polybutylene, and polypentene, or formed of a polymer mixture thereof. Examples of the nonwoven fabric that can be used as the separator is a nonwoven fabric formed by a polymer of polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone, polyester and the like alone or a mixture thereof. Such nonwoven fabrics comprise a nonwoven fabric in the form of a fiber to form a porous web, that is, a spunbond or a meltblown nonwoven fabric composed of long fibers.

The thickness of the separator is not particularly limited, but is preferably in the range of 1 to 100 *µ*m, more preferably 5 to 50*µ*m. If the thickness of the separator is less than 1 *µ*m, the mechanical properties cannot be maintained. If the thickness of the separator exceeds 100 *µ*m, the separator acts as a resistive layer, thereby deteriorating the performance of the battery. The pore size and porosity of the separator are not particularly limited, but it is preferable that the pore size is 0.1 to 50 *µ*m and the porosity is 10 to 95%. If the separator has a pore size of less than 0.1 *µ*m or a porosity of less than 10%, the separator acts as a resistive layer. If the separator has a pore size of more than 50 *µ*m or a porosity of more than 95%, mechanical properties cannot be maintained.

The lithium-sulfur battery of the present invention comprising the positive electrode, the negative electrode, separator, and the electrolyte solution as described above may be manufactured through a process of making the positive electrode face the negative electrode, and interposing a separator therebetween and then injecting the electrolyte solution for the lithium secondary battery according to the present invention.

Meanwhile, the lithium-sulfur battery according to the present invention can be not only applicable to a battery cell used as a power source of a small device, but also can be particularly suitably usable as a unit battery of a battery module which is a power source of a medium and large-sized device. In this respect, the present invention also provides a battery module in which at least two lithium-sulfur batteries are electrically connected (in series or in parallel). It is needless to say that the number of lithium-sulfur batteries comprised in the battery module may be variously adjusted in consideration of the use and capacity of the battery module. In addition, the present invention provides a battery pack in which the battery modules are electrically connected according to a conventional technique in the art. The battery module and the battery pack may be used as a power source for at least one medium and large-sized device selected from power tools; electric cars comprising an electric vehicle (EV), a hybrid electric vehicle (HEV), and a plug-in hybrid electric vehicle (PHEV); electric trucks; electric commercial vehicles; or power storage systems, but the present invention is not limited thereto.

Hereinafter, preferred examples are provided to help understanding of the present invention, but the following examples are only for exemplifying the present invention, and it is apparent to those skilled in the art that various changes and modifications can be made within the scope of the appended claims.

### Example

### Preparation of electrolyte solution for lithium-sulfur secondary battery

### Example 1

To the organic solvent obtained by mixing 2-methylfuran(first solvent) and 1,2-dimethoxyethane(second solvent) at a volume ratio (v / v) of 1:4, 3.0 wt.% of lithium nitrate (LiNO₃) and 0.1 wt.% of lithium difluoro(oxallato) borate (LiDFOB), based on the total weight of the electrolyte solution was added, and lithiumbis(fluorineulfonyl)imide (LiFSI) was dissolved to be in a concentration of 0.75 M (mol/L) to prepare an electrolyte solution for a lithium-sulfur battery.

### Example 2

An electrolyte solution for a lithium-sulfur battery was prepared in the same manner as Example 1, except that 0.5 wt.% of lithium difluoro (oxalato) borate (LiDFOB) was used.

### Example 3

An electrolyte solution for a lithium-sulfur battery was prepared in the same manner as Example 1, except that 1.0 wt.% of lithium difluoro (oxalato) borate (LiDFOB) was used.

### Example 4

An electrolyte solution for a lithium-sulfur battery was prepared in the same manner as Example 1, except that an organic solvent obtained by mixing 2-methylfuran (first solvent) and 1,2-dimethoxyethane (second solvent) at a volume ratio (V/V) of 1:4.5 was used as an organic solvent.

### Example 5

An electrolyte solution for a lithium-sulfur battery was prepared in the same manner as Example 1, except that an organic solvent obtained by mixing 2-methylfuran (first solvent) and 1,2-dimethoxyethane (second solvent) at a volume ratio (V/V) of 1:5 was used as an organic solvent.

### Example 6

An electrolyte solution for a lithium-sulfur battery was prepared in the same manner as Example 1, except that an organic solvent obtained by mixing 2-methylfuran (first solvent) and 1,2-dimethoxyethane (second solvent) at a volume ratio (V/V) of 1:5.5 was used as an organic solvent.

### Example 7

An electrolyte solution for a lithium-sulfur battery was prepared in the same manner as Example 1, except that an organic solvent obtained by mixing 2-methylfuran (first solvent) and 1,2-dimethoxyethane (second solvent) at a volume ratio (V/V) of 1:6 was used as an organic solvent.

### Example 8

An electrolyte solution for a lithium-sulfur battery was prepared in the same manner as Example 1, except that an organic solvent obtained by mixing 2-methylfuran (first solvent) and 1,2-dimethoxyethane (second solvent) at a volume ratio (V/V) of 1:2.5 was used as an organic solvent.

### Comparative Example 1

An electrolyte solution for a lithium-sulfur battery was prepared in the same manner as Example 1, except that lithium difluoro (oxalato) borate (LiDFOB) was not added.

### Comparative Example 2

An electrolyte solution for a lithium-sulfur battery was prepared in the same manner as Example 1, except that an organic solvent obtained by mixing dioxolane (first solvent) and 1,2-dimethoxyethane (second solvent) at a volume ratio (V/V) of 1:2 was used as an organic solvent.

The contents of the first solvent, the second solvent, and the borate-based lithium salt of the electrolyte solutions for lithium-sulfur batteries of Examples 1 to 8 and Comparative Examples 1 and 2 are shown in Table 1 below.

**Table 1:**

| | First solvent | | Second solvent | Borate-based lithium salt |
|---|---|---|---|---|
| | dioxolane | 2-methylfuran | 1,2-dimethoxyethane | LiDFOB |
| Example 1 | - | 1 | 4 | 0.1 |
| Example 2 | - | 1 | 4 | 0.5 |
| Example 3 | - | 1 | 4 | 1.0 |
| Example 4 | - | 1 | 4.5 | 0.1 |
| Example 5 | - | 1 | 5 | 0.1 |
| Example 6 | - | 1 | 5.5 | 0.1 |
| Example 7 | - | 1 | 6 | 0.1 |
| Example 8 | - | 1 | 2.5 | 0.1 |
| Comparative Example 1 | - | 1 | 4 | - |
| Comparative Example 2 | 1 | - | 2 | 0.1 |

### Experimental Example 1: lifetime characteristics of lithium-sulfur battery

Sulfur was mixed with an electrically conductive material and a binder in acetonitrile to produce a slurry for the positive electrode active material. At this time, the carbon black was used as an electrically conductive material, and the binder of the mixed form of SBR and CMC was used as a binder, the mixing ratio was allowed to be a weight ratio 72:24:4 of sulfur : electrically conductive material : binder. The slurry for the positive electrode active material was applied to the aluminum current collector at a loading amount of 4.1 mAh/cm², followed by drying to prepare a positive electrode having a porosity of 70%. Also, the lithium metal having a thickness of 45 *µ*m was used as a negative electrode.

After positioning the positive electrode and the negative electrode prepared by the above-described method to face each other, a polyethylene separator having a thickness of 20 *µ*m and a porosity of 45% was interposed between the positive electrode and the negative electrode.

Thereafter, the electrolyte solution according to Examples 1 to 8 and Comparative Examples 1 and 2 was injected into the case to prepare lithium-sulfur batteries.

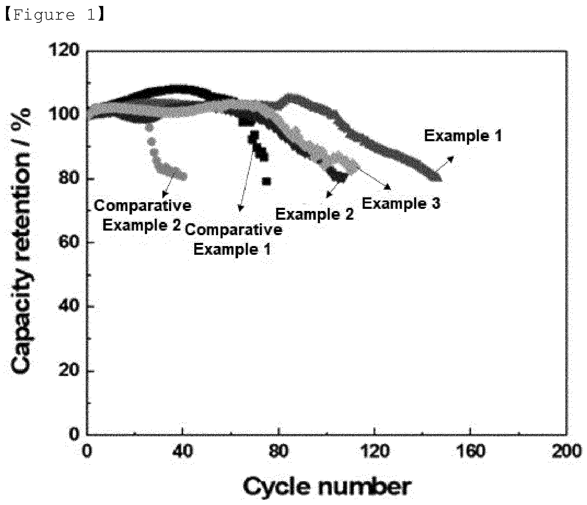

The lithium-sulfur batteries manufactured in the above method were carried out for 2.5 cycles in the protocol of discharging at 0.1C in CC mode at 25 °C until reaching 1.8 V at OCV (open circuit voltage) and charging at 0.1C until reaching 2.5 V again, and after the stabilization cycle of the battery, 0.3C charging/0.5C discharging cycles were performed in a voltage range between 1.8 V and 2.5 V to evaluate the cycle lifetime based on 80% retention of the high-rate initial capacity, and the results are shown in Table 2 and FIGs. 1 to 2 below

**Table 2:**

| | Number of cycle (based on 80% retention of capacity) |
|---|---|
| Example 1 | 160 |
| Example 2 | 127 |
| Example 3 | 133 |
| Example 4 | 283 |
| Example 5 | 219 |
| Example 6 | 208 |
| Example 7 | 166 |
| Example 8 | 110 |
| Comparative Example 1 | 97 |
| Comparative Example 2 | 40 |

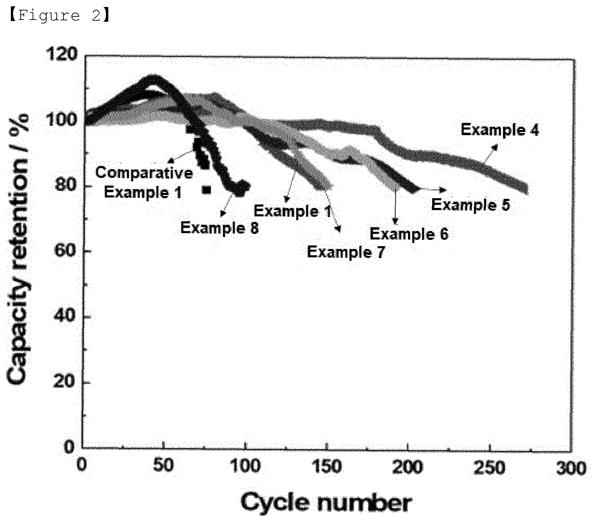

FIGs. 1 and 2 are graphs showing the lifetime characteristics of lithium-sulfur batteries including electrolyte solutions according to Examples of the present invention and Comparative Examples. As shown in FIGs. 1 and 2 and Table 2 above, it was confirmed that the lithium-sulfur batteries using the electrolyte solutions for the lithium-sulfur batteries comprising the first solvent comprising a heterocyclic compound containing one or more double bonds and at the same time, containing any one of an oxygen atom and a sulfur atom (2-methylfuran) and borate-based lithium salt (LiDFOB) according to the present invention, have a remarkably high number of cycles based on the 80% capacity retention rate of the battery, and thus have excellent lifetime characteristics, as compared to the case using the electrolyte solution without borate-based lithium salt (Comparative Example 1) and the case using a heterocyclic compound not containing a double bond as the first solvent (Comparative Example 2).

### Experimental Example 2: Evaluation of lithium cycle efficiency of lithium-sulfur battery

Lithium metal electrodes (working electrode and counter electrode) having a thickness of 20 *µ*m, polyethylene separators having a thickness of 20*µ*m and a porosity of 45% and electrolyte solutions according to Examples 1 to 8 and Comparative Examples 1 and 2 above were used to manufacture symmetric cells of 2032 coin cells (CR 2032).

For the lithium-sulfur batteries in the form of symmetric cells prepared by the above method, the lithium cyclic efficiency was measured at 1C depth of discharge (DOD) of 83%, and the results are shown in Table 3 below.

The 1C DOD of 83% means charging and discharging an amount of 16.6 *µ*m corresponding to 83% of 20 *µ*m of Li, and means a current density of 3.7 mA/cm², which is a rate at which this capacity can be charged or discharged for 1 hour.

**Table 3:**

| | Lithium cycle efficiency (%) |
|---|---|
| Example 1 | 99.2 |
| Example 2 | 98.9 |
| Example 3 | 98.6 |
| Example 4 | 99.2 |
| Example 5 | 98.9 |
| Example 6 | 98.6 |
| Example 7 | 96.7 |
| Example 8 | 96.1 |
| Comparative Example 1 | 95.4 |
| Comparative Example 2 | 97.5 |

As shown in Table 3 above, it was confirmed that the lithium-sulfur batteries using the electrolyte solutions for the lithium-sulfur batteries comprising the first solvent comprising a heterocyclic compound containing one or more double bonds and at the same time, containing any one of an oxygen atom and a sulfur atom (2-methylfuran) and borate-based lithium salt (LiDFOB) according to the present invention, have improved stability between the electrolyte solution for the lithium-sulfur battery and the lithium negative electrode, and thus have excellent lithium cycle efficiency, as compared to the case using the electrolyte solution without borate-based lithium salt (Comparative Example 1) and the case using a heterocyclic compound not containing a double bond as the first solvent (Comparative Example 2).

## Claims

1. An electrolyte solution for a lithium-sulfur battery comprising,
a first solvent comprising a heterocyclic compound containing one or more double bonds and at the same time, containing any one of an oxygen atom and a sulfur atom, wherein the heterocyclic compound is selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene;
a second solvent comprising at least one of an ether-based compound, an ester-based compound, an amide-based compound, and a carbonate-based compound;
lithium salt, wherein the lithium salt is at least one selected from the group consisting of LiCl, LiBr, LiI, LiClO₄, LiPF₆, LiCF₃SO₃, LiCF₃CO₂, LiAsF₆, LiSbF₆, LiAlCl₄, CH₃SO₃Li, CF₃SO₃Li, (C₂F₅SO₂)₂NLi, (SO₂F)₂NLi, (CF₃SO₂)₃CLi, and lithium lower aliphatic carboxylate having 4 or less carbon atoms;
lithium nitrate; and
borate-based lithium salt.

2. The electrolyte solution for the lithium-sulfur battery according to claim 1, wherein the borate-based lithium salt is at least one selected from the group consisting of lithium tetrafluoroborate (LiBF₄), lithium bis(oxalate)borate (LiBOB), lithium difluoro(oxalato)borate (LiFOB) and lithium bis(2-methyl-2-fluoro-malonato)borate.

3. The electrolyte solution for the lithium-sulfur battery according to claim 1, wherein the content of the borate-based lithium salt is 0.01 wt.% to 5.0 wt.% relative to the total weight of the electrolyte solution for the lithium-sulfur battery.

4. The electrolyte solution for the lithium-sulfur battery according to claim 1, wherein the volume ratio of the first solvent and the second solvent is 1:2.5 to 1:6.

5. The electrolyte solution for the lithium-sulfur battery according to claim 1, wherein the weight ratio of the borate-based lithium salt and the lithium nitrate is 1:1 to 1:30.

6. The electrolyte solution for the lithium-sulfur battery according to claim 1, wherein the concentration of the lithium salt is 0.2 to 2.0 M.

7. The electrolyte solution for the lithium-sulfur battery according to claim 1, wherein the heterocyclic compound is a substituted or unsubstituted 3 to 15 membered heterocyclic compound by at least one selected from the group consisting of an alkyl group having 1 to 4 carbon atoms, a cyclic alkyl group having 3 to 8 carbon atoms, an aryl group having 6 to 10 carbon atoms, a halogen group, a nitro group, an amine group, and a sulfonyl group, or a multicyclic compound of a heterocyclic compound and at least one of a cyclic alkyl group having 3 to 8 carbon atoms and an aryl group having 6 to 10 carbon atoms.

8. The electrolyte solution for the lithium-sulfur battery according to claim 1, wherein the ether-based compound of the second solvent is at least one selected from the group consisting of dimethyl ether, diethyl ether, dipropyl ether, methyl ethyl ether, methyl propyl ether, ethyl propyl ether, dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetra-ethylene glycol dimethyl ether, tetra-ethylene glycol diethyl ether, tetra-ethylene glycol methyl ethyl ether, polyethylene glycol dimethyl ether, polyethylene glycol diethyl ether and polyethylene glycol methyl ethyl ether.

9. The electrolyte solution for the lithium-sulfur battery according to claim 1, wherein the electrolyte solution for the lithium-sulfur battery further comprises at least one selected from the group consisting of lanthanum nitrate, potassium nitrate, cesium nitrate, magnesium nitrate, barium nitrate, lithium nitrite, potassium nitrite, and cesium nitrite.

10. The electrolyte solution for the lithium-sulfur battery according to claim 1, wherein the electrolyte solution for the lithium-sulfur battery comprises 2-methylfuran which is a first solvent, dimethoxyethane which is a second solvent, LiFSI ((SO₂F)₂NLi) which is lithium salt, lithium difluoro(oxalato)borate (LiFOB) which is borate-based lithium salt, and lithium nitrate.

11. A lithium-sulfur battery comprising,
a positive electrode;
a negative electrode;
a separator interposed between the positive electrode and the negative electrode; and
the electrolyte solution for the lithium-sulfur battery according to claim 1.

## Patentansprüche

1. Elektrolytlösung für eine Lithium-Schwefel-Batterie, umfassend
ein erstes Lösungsmittel, umfassend eine heterocyclische Verbindung, die eine oder mehrere Doppelbindungen enthält und gleichzeitig eines von einem Sauerstoffatom und einem Schwefelatom enthält, wobei die heterocyclische Verbindung ausgewählt ist aus der Gruppe bestehend aus Furan, 2-Methylfuran, 3-Methylfuran, 2-Ethylfuran, 2-Propylfuran, 2-Butylfuran, 2,3-Dimethylfuran, 2,4-Dimethylfuran, 2,5-Dimethylfuran, Pyran, 2-Methylpyran, 3-Methylpyran, 4-Methylpyran, Benzofuran, 2-(2-Nitrovinyl)furan, Thiophen, 2-Methylthiophen, 2-Ethylthiophen, 2-Propylthiophen, 2-Butylthiophen, 2,3-Dimethylthiophen, 2,4-Dimethylthiophen und 2,5-Dimethylthiophen;
ein zweites Lösungsmittel, umfassend mindestens eines von einer Verbindung auf Etherbasis, einer Verbindung auf Esterbasis, einer Verbindung auf Amidbasis und einer Verbindung auf Carbonatbasis;
Lithiumsalz, wobei das Lithiumsalz mindestens eines ist, ausgewählt aus der Gruppe bestehend aus LiCl, LiBr, LiI, LiClO₄, LiPF₆, LiCF₃SO₃, LiCF₃CO₂, LiAsF₆, LiSbF₆, LiAlCl₄, CH₃SO₃Li, CF₃SO₃Li, (C₂F₅SO₂)₂NLi, (SO₂F)₂NLi, (CF₃SO₂)₃CLi und niederaliphatischem Lithiumcarboxylat mit 4 oder weniger Kohlenstoffatomen;
Lithiumnitrat; und
Lithiumsalz auf Boratbasis.

2. Elektrolytlösung für die Lithium-Schwefel-Batterie nach Anspruch 1, wobei das Lithiumsalz auf Boratbasis mindestens eines ist, ausgewählt aus der Gruppe bestehend aus Lithiumtetrafluorborat (LiBF₄), Lithiumbis(oxalat)borat (LiBOB), Lithiumdifluor(oxalato)borat (LiFOB) und Lithiumbis(2-methyl-2-fluormalonato)borat.

3. Elektrolytlösung für die Lithium-Schwefel-Batterie nach Anspruch 1, wobei der Gehalt des Lithiumsalzes auf Boratbasis 0,01 Gew.-% bis 5,0 Gew.-%, bezogen auf das Gesamtgewicht der Elektrolytlösung für die Lithium-Schwefel-Batterie, beträgt.

4. Elektrolytlösung für die Lithium-Schwefel-Batterie nach Anspruch 1, wobei das Volumenverhältnis des ersten Lösungsmittels und des zweiten Lösungsmittels 1:2,5 bis 1:6 beträgt.

5. Elektrolytlösung für die Lithium-Schwefel-Batterie nach Anspruch 1, wobei das Gewichtsverhältnis des Lithiumsalzes auf Boratbasis und des Lithiumnitrats 1:1 bis 1:30 beträgt.

6. Elektrolytlösung für die Lithium-Schwefel-Batterie nach Anspruch 1, wobei die Konzentration des Lithiumsalzes 0,2 bis 2,0 M beträgt.

7. Elektrolytlösung für die Lithium-Schwefel-Batterie nach Anspruch 1, wobei die heterocyclische Verbindung eine substituierte oder unsubstituierte 3- bis 15-gliedrige heterocyclische Verbindung ist, durch mindestens eines, ausgewählt aus der Gruppe bestehend aus einer Alkylgruppe mit 1 bis 4 Kohlenstoffatomen, einer cyclischen Alkylgruppe mit 3 bis 8 Kohlenstoffatomen, einer Arylgruppe mit 6 bis 10 Kohlenstoffatomen, einer Halogengruppe, einer Nitrogruppe, einer Amingruppe und einer Sulfonylgruppe, oder eine multicyclische Verbindung einer heterocyclischen Verbindung und mindestens eines von einer cyclischen Alkylgruppe mit 3 bis 8 Kohlenstoffatomen und einer Arylgruppe mit 6 bis 10 Kohlenstoffatomen.

8. Elektrolytlösung für die Lithium-Schwefel-Batterie nach Anspruch 1, wobei die Verbindung auf Etherbasis des zweiten Lösungsmittels mindestens eine ist, ausgewählt aus der Gruppe bestehend aus Dimethylether, Diethylether, Dipropylether, Methylethylether, Methylpropylether, Ethylpropylether, Dimethoxyethan, Diethoxyethan, Methoxyethoxyethan, Diethylenglykoldimethylether, Diethylenglykoldiethylether, Diethylenglykolmethylethylether, Triethylenglykoldimethylether, Triethylenglykoldiethylether, Triethylenglykolmethylethylether, Tetraethylenglykoldimethylether, Tetraethylenglykoldiethylether, Tetraethylenglykolmethylethylether, Polyethylenglykoldimethylether, Polyethylenglykoldiethylether und Polyethylenglykolmethylethylether.

9. Elektrolytlösung für die Lithium-Schwefel-Batterie nach Anspruch 1, wobei die Elektrolytlösung für die Lithium-Schwefel-Batterie ferner mindestens eines umfasst, ausgewählt aus der Gruppe bestehend aus Lanthannitrat, Kaliumnitrat, Cäsiumnitrat, Magnesiumnitrat, Bariumnitrat, Lithiumnitrit, Kaliumnitrit und Cäsiumnitrit.

10. Elektrolytlösung für die Lithium-Schwefel-Batterie nach Anspruch 1, wobei die Elektrolytlösung für die Lithium-Schwefel-Batterie 2-Methylfuran, das ein erstes Lösungsmittel ist, Dimethoxyethan, das ein zweites Lösungsmittel ist, LiFSI ((SO₂F)₂NLi), das ein Lithiumsalz ist, Lithiumdifluor(oxalato)borat (LiFOB), das ein Lithiumsalz auf Boratbasis ist, und Lithiumnitrat umfasst.

11. Lithium-Schwefel-Batterie, umfassend
eine positive Elektrode;
eine negative Elektrode;
einen Separator, der zwischen der positiven Elektrode und der negativen Elektrode angeordnet ist; und
die Elektrolytlösung für die Lithium-Schwefel-Batterie nach Anspruch 1.

## Revendications

1. Solution électrolytique pour une batterie au lithium-soufre comprenant,
un premier solvant comprenant un composé hétérocyclique contenant une ou plusieurs liaisons doubles et en même temps, contenant soit un atome d'oxygène, soit un atome de soufre, le composé hétérocyclique est sélectionné dans le groupe constitué de furane, 2-méthylfurane, 3-méthylfurane, 2-éthylfurane, 2-propylfurane, 2-butylfurane, 2,3-diméthylfurane, 2,4-diméthylfurane, 2,5-diméthylfurane, pyrane, 2-méthylpyrane, 3-méthylpyrane, 4-méthylpyrane, benzofurane, 2-(2-nitrovinyl)furane, thiophène, 2-méthylthiophène, 2-éthylthiophène, 2-propylthiophène, 2-butylthiophène, 2,3-diméthylthiophène, 2,4-diméthylthiophène et 2,5-diméthylthiophène ;
un deuxième solvant comprenant un ou plusieurs composés parmi un composé à base d'éther, un composé à base d'ester, un composé à base d'amide et un composé à base de carbonate ;
un sel de lithium, le sel de lithium est un ou plusieurs éléments sélectionnés dans le groupe constitué de LiCl, LiBr, Lil, LiClO₄, LiPF₆, LiCF₃SO₃, LiCF₃CO₂, LiAsF₆, LiSbF₆, LiAlCl₄, CH₃SO₃Li, CF₃SO₃Li, (C₂F₅SO₂)₂NLi, (SO₂F)₂NLi, (CF₃SO₂)₃CLi et un carboxylate aliphatique inférieur de lithium ayant 4 atomes de carbone ou moins ;
un nitrate de lithium ; et
un sel de lithium à base de borate.

2. Solution électrolytique pour la batterie au lithium-soufre selon la revendication 1, dans laquelle le sel de lithium à base de borate est un ou plusieurs éléments sélectionnés dans le groupe constitué de tétrafluoroborate de lithium (LiBF₄), bis(oxalate)borate (LiBOB) de lithium, difluoro(oxalato)borate de lithium (LiFOB) et bis(2-méthyl-2-fluoro-malonato)borate de lithium.

3. Solution électrolytique pour la batterie au lithium-soufre selon la revendication 1, dans laquelle la teneur en sel de lithium à base de borate est 0,01 % en poids à 5,0 % en poids du poids total de la solution électrolytique pour la batterie au lithium-soufre.

4. Solution électrolytique pour la batterie au lithium-soufre selon la revendication 1, dans laquelle le rapport en volume du premier solvant et du deuxième solvant est 1:2,5 à 1:6.

5. Solution électrolytique pour la batterie au lithium-soufre selon la revendication 1, dans laquelle le rapport en poids du sel de lithium à base de borate et du nitrate de lithium est 1:1 à 1:30.

6. Solution électrolytique pour la batterie au lithium-soufre selon la revendication 1, dans laquelle la concentration du sel de lithium est 0,2 à 2,0 M.

7. Solution électrolytique pour la batterie au lithium-soufre selon la revendication 1, dans laquelle le composé hétérocyclique est un composé hétérocyclique à 3 à 15 chaînons substitué ou non substitué par un ou plusieurs éléments sélectionnés dans le groupe constitué d'un groupe alkyle ayant 1 à 4 atomes de carbone, un groupe alkyle cyclique ayant 3 à 8 atomes de carbone, un groupe aryle ayant 6 à 10 atomes de carbone, un groupe halogène, un groupe nitro, un groupe amine et un groupe sulfonyle ou d'un composé multicyclique d'un composé hétérocyclique et soit un groupe alkyle cyclique ayant 3 à 8 atomes de carbone, soit un groupe aryle ayant 6 à 10 atomes de carbone.

8. Solution électrolytique pour la batterie au lithium-soufre selon la revendication 1, dans laquelle le composé à base d'éther du deuxième solvant est un ou plusieurs éléments sélectionnés dans le groupe constitué d'éther diméthylique, éther diéthylique, éther dipropylique, éther méthyléthylique, éther méthylpropylique, éther éthylpropylique, diméthoxyéthane, diéthoxyéthane, méthoxyéthoxyéthane, éther diméthylique de diéthylène glycol, éther diéthylique de diéthylène glycol, éther méthyléthylique de diéthylène glycol, éther diméthylique de triéthylène glycol, éther diéthylique de triéthylène glycol, éther méthyléthylique de triéthylène glycol, éther diméthylique de tétra-éthylène glycol, éther diéthylique de tétra-éthylène glycol, éther méthyléthylique de tétra-éthylène glycol, éther diméthylique de polyéthylène glycol, éther diéthylique de polyéthylène glycol et éther méthyléthylique de polyéthylène glycol.

9. Solution électrolytique pour la batterie au lithium-soufre selon la revendication 1, la solution électrolytique pour la batterie au lithium-soufre comprend en outre un ou plusieurs éléments sélectionnés dans le groupe constitué de nitrate de lanthane, nitrate de potassium, nitrate de césium, nitrate de magnésium, nitrate de baryum, nitrite de lithium, nitrite de potassium et nitrite de césium.

10. Solution électrolytique pour la batterie au lithium-soufre selon la revendication 1, la solution électrolytique pour la batterie au lithium-soufre comprend un 2-méthylfurane qui est un premier solvant, un diméthoxyéthane qui est un deuxième solvant, LiFSI ((SO₂F)₂NLi) qui est un sel de lithium, un difluoro(oxalato)borate de lithium (LiFOB) qui est un sel de lithium à base de borate et un nitrate de lithium.

11. Batterie au lithium-soufre comprenant,
une électrode positive ;
une électrode négative ;
un séparateur intercalé entre l'électrode positive et l'électrode négative ; et
la solution électrolytique pour la batterie au lithium-soufre selon la revendication 1.
